# EUROPÄISCHE PATENTANMELDUNG

(11) **EP 1 950 065 A1**
(43) Veröffentlichungstag der Anmeldung: **30.07.2008**
(21) Anmeldenummer: 07033599.7
(22) Anmeldetag: 27.12.2007
(51) Int. Cl.: B60H 1/00

(54) **Klimaanlage für ein Kraftfahrzeug**

(30) Priorität: 26.01.2007 DE 102007004125
(71) Anmelder: Enerday GmbH, 82131 Stockdorf (DE)
(72) Erfinder: Pfalzgraf, Manfred, 82211 Herrsching am Ammersee (DE); Bedenbecker, Markus, 82131 Gauting (DE); Boltze, Matthias, 17039 Wulkenzin (OT Neuendorf) (DE); Engl, Andreas, 80689 München (DE)
(74) Vertreter: Schumacher & Willsau

(57) **Zusammenfassung**

Die Erfindung betrifft eine Klimaanlage (12) für ein Kraftfahrzeug (10) zur Standklimatisierung, mit einem Brennstoffzellensystem (14) umfassend mehrere Funktionseinheiten (18, 26, 42) zum Behandeln des Brennstoffs; und einem von dem Brennstoffzellensystem (14) betreibbaren Kältekreis (16) umfassend mehrere in Fluidverbindung stehende Funktionseinheiten (56, 58, 60, 62).

Vorteilhafterweise ist dabei vorgesehen, dass zumindest eine der Funktionseinheiten (18, 26, 42, 56, 58, 60, 62) und/oder das Brennstoffzellensystem (14) und/oder der Kältekreis (16) als lösbares Modul mittels zumindest einer Schnittstelle (100 - 146) in der Klimaanlage (12) montierbar ist, welche auch dazu ausgelegt ist, eine Austauscheinheit anstelle des lösbaren Moduls (14, 16, 18, 26, 42, 56, 58, 60, 62) in die Klimaanlage (12) zu montieren.

Darüber hinaus betrifft die Erfindung ein Kraftfahrzeug mit solch einer Klimaanlage.

## Beschreibung

Die Erfindung betrifft eine Klimaanlage für ein Kraftfahrzeug zur Standklimatisierung, mit einem Brennstoffzellensystem umfassend mehrere Funktionseinheiten zum Behandeln des Brennstoffs; und einem von dem Brennstoffzellensystem betreibbaren Kältekreis umfassend mehrere in Fluidverbindung stehende Funktionseinheiten.

Darüber hinaus betrifft die Erfindung ein Kraftfahrzeug mit solch einer Klimaanlage.

Aus der DE 102 23 949 A1 ist eine Standklimaanlage mit einer Brennstoffzelle zur Klimatisierung eines Fahrzeugs bekannt. Jedoch sind für unterschiedliche Fahrzeugtypen und Fahrzeuggrößen unterschiedlich ausgelegte Standklimaanlagen erforderlich, was zu einer breiteren Produktpalette führt, was wiederum die Konstruktions- und Herstellungskosten ansteigen lässt.

Es ist daher die Aufgabe der vorliegenden Erfindung, die gattungsgemäße Klimaanlage derart weiterzubilden, dass diese unterschiedliche Anforderungen, insbesondere in Leistungshinsicht, besser erfüllt.

Diese Aufgabe wird durch die Merkmale der unabhängigen Ansprüche gelöst.

Vorteilhafte Ausgestaltungen und Weiterbildungen der Erfindung ergeben sich aus den abhängigen Ansprüchen.

Die erfindungsgemäße Klimaanlage baut auf dem gattungsgemäßen Stand der Technik dadurch auf, dass zumindest eine der Funktionseinheiten und/oder das Brennstoffzellensystem und/oder der Kältekreis als lösbares Modul mittels zumindest einer Schnittstelle in der Klimaanlage montierbar ist, welche auch dazu ausgelegt ist, eine Austauscheinheit anstelle des lösbaren Moduls in die Klimaanlage zu montieren. Dies ermöglicht auf eine sehr kostengünstige und einfache Weise, die Klimaanlage auf verschiedene Anforderungen, beispielsweise im Hinblick auf unterschiedliche Leistungsanforderung oder unterschiedliche zur Verfügung stehende Brennstoffe, anzupassen. Es ist demnach möglich, eine komplette Klimaanlage durch einfaches Austauschen des Brennstoffzellensystems und/oder des Kältekreises oder einer Komponente daraus optimal auf unterschiedliche Anforderungen anzupassen.

Darüber hinaus ist vorteilhaft, dass des Weiteren eine Schnittstelle vorgesehen ist, um wahlweise einen Wärmetauscher, zum Aufnehmen der Abwärme zumindest einer Komponente des Brennstoffzellensystems für Heizzwecke, in der Klimaanlage lösbar zu montieren. Somit kann die Klimaanlage wahlweise mit Heizfunktion ausgestattet werden und somit schnell auf unterschiedliche Kundenwünsche angepasst werden. Ferner hat die Anwendung eines Wärmetauschers den Vorteil, dass die Luft in einem abgeschlossenen System erwärmt wird und somit sichergestellt ist, dass die Luft keine Gerüche aufnimmt, die bei direktem Kontakt entstehen könnten.

Gemäß einer vorteilhaften Ausführungsform ist vorgesehen, dass sich das lösbare Modul von der Austauscheinheit zumindest durch seine Leistung unterscheidet. Dies hat den Vorteil, dass ein riesiges Leistungsspektrum mit einer einzigen Klimaanlage abgedeckt werden kann, ohne dass hierzu die Klimaanlage von Grund auf neu konstruiert werden muss.

Ferner ist vorteilhaft, dass die Schnittstelle eine Verbindung ist, die ohne klimaanlagenfremde Werkzeuge lösbar und befestigbar ist. Dies vereinfacht den Austausch einer Komponente zusätzlich und sorgt für eine benutzerfreundliche Austauschbarkeit von Komponenten.

Außerdem kann vorgesehen sein, dass die das Brennstoffzellensystem umfassenden Funktionseinheiten Elemente der Gruppe bestehend aus einem Reformer, einem Brennstoffzellenstapel und einem Nachbrenner sind. Hierdurch lassen sich die vorstehend genannten Vorteile erreichen.

Diese Vorteile können auch dadurch erreicht werden, dass die der Kältekreis umfassende Funktionseinheiten Elemente der Gruppe bestehend aus einem Kompressor, einem Kondensator, einem Expansionsorgan und einem Verdampfer sind.

Mit dem erfindungsgemäßen Kraftfahrzeug können die vorstehend genannten Vorteile in übertragener Weise erreicht werden.

Eine bevorzugte Ausführungsform der Erfindung wird nachfolgend mit Bezug auf die begleitenden Zeichnungen beispielhaft erläutert.

Es zeigen:
- Figur 1: eine schematische Darstellung einer erfindungsgemäßen Klimaanlage;
- Figur 2: eine Abwandlung des erfindungsgemäßen Ausführungsbeispiels;
- Figur 3: eine schematische Darstellung des Kraftfahrzeugs mit der erfindungsgemäßen Klimaanlage; und
- Figur 4: ein Flussdiagramm des Klimatisierungsbetriebs.

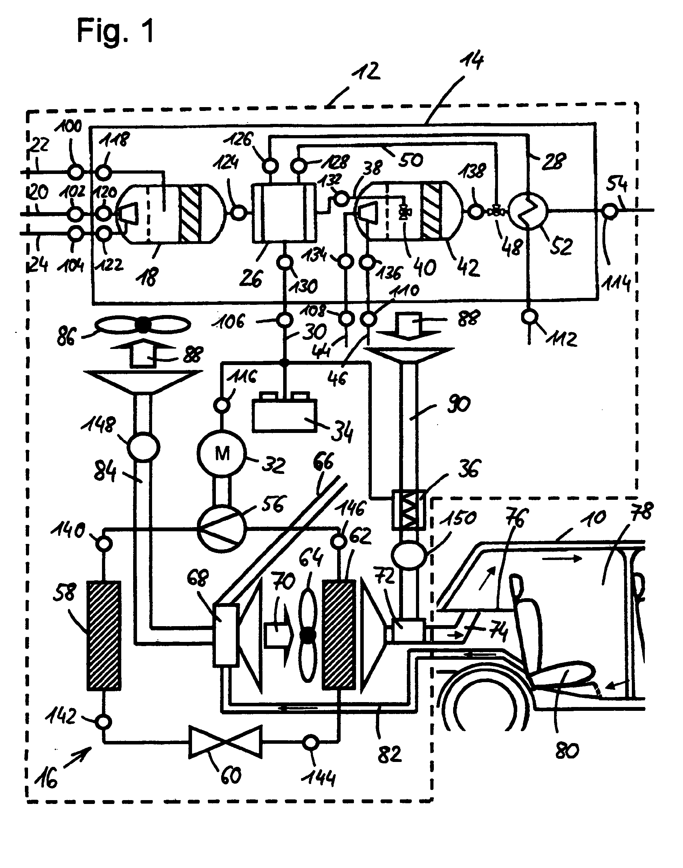

Figur 1 zeigt eine schematische Darstellung einer erfindungsgemäßen Klimaanlage. Die in einem Kraftfahrzeug 10 installierte Klimaanlage 12, die mit einer gestrichelten Linie umrissen ist, umfasst als Hauptelemente ein Brennstoffzellensystem 14 und einen Kältekreis 16.

Das Brennstoffzellensystem 14 umfasst einen Reformer 18, dem über einen Brennstoffstrang 20 aus einem nicht dargestellten Brennstofftank Brennstoff zuführbar ist. Ferner ist dem Reformer 18 an einer zweiten Brennstoffzuführstufe mittels eines Brennstoffstrangs 22 ebenfalls aus dem Brennstofftank Brennstoff zuführbar. Als Brennstoffsorten kommen Diesel, Benzin, Erdgas und weitere aus dem Stand der Technik bekannte Brennstoffsorten in Frage. Weiterhin ist dem Reformer 18 über einen Oxidationsmittelstrang 24 Oxidationsmittel, d.h. insbesondere Luft, zuführbar. Das von dem Reformer 18 erzeugte Reformat ist einem Brennstoffzellenstapel 26 zuführbar. Alternativ kann anstatt des Brennstoffzellenstapels 26 auch nur eine Brennstoffzelle vorgesehen sein. Bei dem Reformat handelt es sich um ein wasserstoffhaltiges Gas, das in dem Brennstoffzellenstapel 26 mit Hilfe von über einen Kathodenzuluftstrang 28 geförderter Kathodenzuluft unter Erzeugung von elektrischer Energie und Wärme umgesetzt wird. Die erzeugte elektrische Energie ist über eine elektrische Leitung 30 einem Elektromotor 32, einer Batterie 34 und einer elektrischen Heizeinrichtung 36 der Klimaanlage 12 zuführbar. Dies kann auf direktem Weg erfolgen oder durch Einspeisung der Energie über einen zentralen Knoten in das elektrische Bordnetz des Kraftfahrzeugs 10. Im dargestellten Fall ist das Anodenabgas über einen Anodenabgasstrang 38 einer Mischeinheit 40 eines Nachbrenners 42 zuführbar. Ferner ist dem Nachbrenner 42 über einen Brennstoffstrang 44 Brennstoff aus dem Brennstofftank und über einen Oxidationsmittelstrang 46 Oxidationsmittel zuführbar. In den Brennstoffsträngen 20, 22 und 44 sind geeignete, nicht dargestellte Fördereinrichtungen, wie beispielsweise Pumpen, angeordnet. Ebenso sind in den Oxidationsmittelsträngen 24 und 46 entsprechende, nicht dargestellte Fördereinrichtungen, in diesem Fall vorzugsweise Gebläse, angeordnet. Diese Fördereinrichtungen können direkt vom Brennstoffzellenstapel 26 oder von der Batterie 34 mit Strom versorgt werden. In dem Nachbrenner 42 erfolgt eine Umsetzung des abgereicherten Anodenabgases mit dem geförderten Brennstoff und Oxidationsmittel zu einem Verbrennungsabgas, welches in einer Mischeinheit 48 mit Kathodenabluft vermischt wird, die über einen Kathodenabluftstrang 50 von dem Brennstoffzellenstapel 26 zu der Mischeinheit 48 gefördert wird. Das Verbrennungsabgas, welches nahezu keine Schadstoffe enthält, durchströmt einen Wärmetauscher 52 zum Vorwärmen der Kathodenzuluft und verlässt schließlich das Brennstoffzellensystem 14 über einen Abgasauslass 54.

In dem Kältekreis 16 sind ein Kompressor 56, ein Kondensator 58, ein Expansionsorgan 60 und ein Verdampfer 62 angeordnet. Der Kompressor 56 ist von dem Elektromotor 32 antreibbar, welcher wiederum vorzugsweise durch den Brennstoffstoffzellenstapel 26 des Brennstoffzellensystems 14 mit Energie versorgt wird, aber kurzzeitig auch von der Batterie 34 mit Energie versorgt werden kann. Dem Verdampfer 62 ist ein Gebläse 64 zugeordnet. Über eine Außenluftleitung 66 kann von Außen Umgebungsluft angesaugt werden. Der Begriff "von Außen", wie er im Zusammenhang mit dieser Erfindung verwendet wird, bedeutet dabei von außerhalb des Innenraumes 78, bezeichnet somit die das Kraftfahrzeug 10 umgebende Luft. Die Außenluftleitung 66 führt zu einer Stelleinrichtung 68, welche die Außenluft dem Gebläse 64 zuführen kann. Die von der Stelleinrichtung 68 zum Gebläse 64 geleitete Luft strömt als Luftstrom 70 an dem Verdampfer 62 vorüber. Auf diese Weise kann dem Luftstrom 70 durch den Verdampfer 62 Wärmeenergie entzogen werden. Der gekühlte Luftstrom kann dann über eine Stelleinrichtung 72, eine Luftführung 74 und eine Hutablage 76 einem Fahrzeuginnenraum 78 zugeführt werden. Die Stelleinrichtung 72 kann beispielsweise durch ein Elektromagnetventil oder durch Rückschlagventile, welche jeweils nur eine Strömung von den beiden Zuleitungen hin zur Luftführung 74 zulassen, realisiert werden. Die gekühlte Luft strömt durch den Fahrzeuginnenraum 78 und verlässt diesen unterhalb einer Sitzbank 80, vorzugsweise der hinteren Sitzbank. Anschließend strömt die Luft über eine Luftführung 82 zurück zu der Stelleinrichtung 68, wo sie ganz oder teilweise nach Außen abgeführt wird oder zurück zum Gebläse 64 geleitet wird. Für die Führung der Luft nach Außen ist eine entsprechende Leitung vorgesehen, die aus Gründen der Übersichtlichkeit nicht dargestellt ist. Über die Schaltung der Stelleinrichtung 68 lässt sich somit wahlweise ein Frischluft- oder ein Umluftkonzept realisieren, bei dem Luft von Außen über die Außenluftleitung 66 angesaugt wird oder die Luft aus der Luftführung 82 rezirkuliert wird. Auch Mischformen dieser Betriebsarten sind möglich. Ferner kann mittels der Stelleinrichtung 68, die über die Außenluftleitung 66 eingeleitete Luft einer Luftführung 84 und über diese einem Gebläse 86 zugeführt werden. In diesem Falle strömt diese Luft als Luftstrom 88 an heißen Teilen des Brennstoffzellensystems 14 direkt vorüber oder durch (nicht dargestellte) Wärmetauscher, die zwischen dem Luftstrom 88 und den heißen Teilen vermitteln. Die heißen Teile des Brennstoffzellensystems 14 sind vorzugsweise der Reformer 18, der Brennstoffzellenstapel 26 und der Nachbrenner 42. Auf diese Weise kann durch die Abwärme der heißen Teile des Brennstoffzellensystems 14 dem Luftstrom 88 Wärmeenergie zugeführt werden. Der erwärmte Luftstrom 88 führt über eine Luftführung 90 zu der elektrischen Heizeinrichtung 36, die direkt von einer vom Brennstoffzellenstapel 26 erzeugten oder von der Batterie 34 gespeicherten Energie versorgt wird. Somit kann in einem Heizbetrieb die ohnehin schon vorgewärmte Luft in der Luftführung 90 weiter erwärmt werden und über die Stelleinrichtung 72 und die Luftführung 74 dem Innenraum 78 zugeführt werden. Nach dem Durchströmen des Innenraums 78 führt der Luftstrom über die Luftführung 82 zur Stelleinrichtung 68, wo er entweder nach Außen abgeführt wird oder zurück zum Gebläse 86 geleitet wird. Auch hierbei lässt sich über die Schaltung der Stelleinrichtung 68 somit wahlweise in einem solchen Heizbetrieb ein Umluftkonzept realisieren, bei dem Luft von Außen über die Außenluftleitung 66 angesaugt wird oder die Luft aus der Luftführung 82 rezirkuliert wird.

Erfindungsgemäß sind der Reformer 18 über Schnittstellen 118, 120, 122 und 124, der Brennstoffzellenstapel 26 über Schnittstellen 124, 126, 128 und 130 sowie der Nachbrenner 42 über Schnittstellen 132, 134, 136 und 138 als lösbare Module im Brennstoffzellensystem 14 und somit in der Klimaanlage 12 montierbar. Darüber hinaus ist das Brennstoffzellensystem 14 selbst über Schnittstellen 100, 102, 104, 106, 108, 110, 112 und 114 als lösbares Modul in der Klimaanlage 12 montierbar. Auf die selbe Weise sind der Kompressor 56 über Schnittstellen 140 und 146, der Kondensator 58 über Schnittstellen 140 und 142, das Expansionsorgan 60 über Schnittstellen 142 und 144 sowie der Verdampfer 62 über Schnittstellen 144 und 146 als lösbare Module im Kältekreis 16 und somit in der Klimaanlage 12 montierbar. Der Kältekreis 16 ist als Ganzes über eine Schnittstelle 116 als lösbares Modul in der Klimaanlage 12 montierbar. Für die Zwecke der lösbaren modularen Montage sind die Schnittstellen 100 - 146 als schnell und einfach zu lösende Verbindungen ausgebildet. Vorzugsweise sind diese Verbindungen ohne Zuhilfenahme von Werkzeugen koppelbar und lösbar. Als mögliche Verbindungsarten kommen hierbei insbesondere für Fluid führende Verbindungen ein Bajonettverschluss und für elektrischen Strom führende Verbindungen eine Steckverbindung in Betracht. Erfindungsgemäß kann durch einen derartigen modularen Aufbau jede Komponente einfach und schnell gegen eine funktionsgleiche Komponente unterschiedlicher Leistung ausgetauscht werden, d.h. der Brennstoffzellenstapel 26 kann durch einen größeren Brennstoffzellenstapel, der eine höhere Spannung liefert, ersetzt werden. Alternativ können sich diese funktionsgleichen Komponenten hinsichtlich der benötigten Brennstoffsorte unterscheiden, d.h. ein auf Benzin ausgelegter Reformer kann gegen einen auf Diesel ausgelegten Reformer ausgetauscht werden.

Darüber hinaus kann über Schnittstellen 148 und 150, für die das vorstehend Erläuterte in übertragener Weise gilt, der Klimaanlagenteil zum Heizen gelöst und demontiert werden. Beispielsweise in sehr heißen Einsatzgebieten, in denen keine Heizfunktion erforderlich ist, kann somit das Gebläse 88 und die elektrische Heizeinrichtung 36 entkoppelt werden, ohne die Klimaanlage 12 insgesamt neu konstruieren zu müssen. Im Bedarfsfall können diese Komponenten wieder montiert werden.

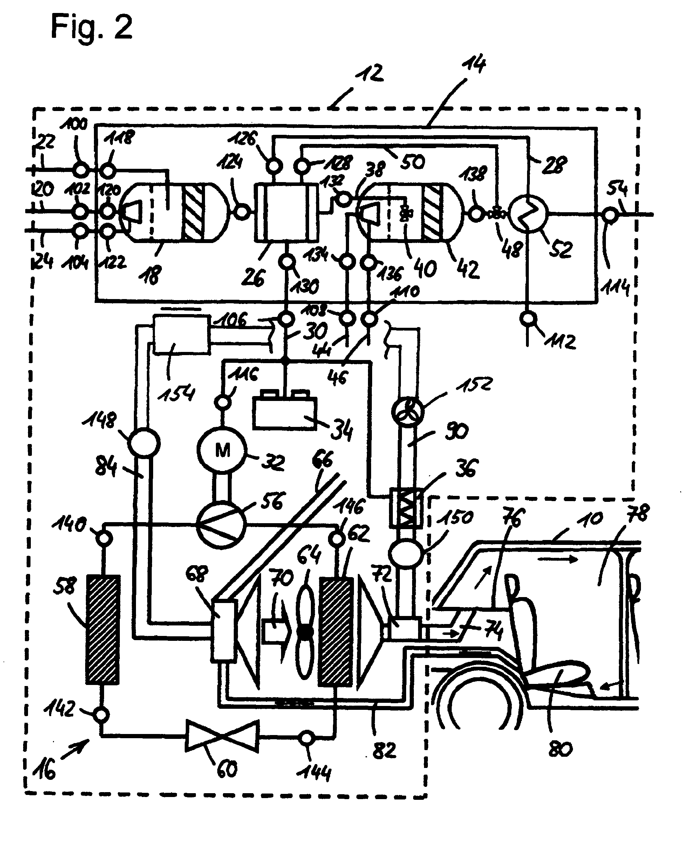

Figur 2 zeigt eine Abwandlung des erfindungsgemäßen Ausführungsbeispiels. Diese Abwandlung unterscheidet sich von der in Figur 1 dargestellten Ausführung nur dadurch, dass anstatt des Gebläses 88 ein Wärmetauscher 154 und ein Gebläse 152 vorgesehen ist. Die Montage dieses Wärmetauschers 154 und des Gebläses 152 ist über die Schnittstellen 148 und 150 realisierbar, d.h. der in Figur 2 dargestellte Klimaanlagenteil zwischen Schnittstelle 148 und Schnittstelle 150 ist gegen den in Figur 2 dargestellten Klimaanlagenteil zwischen den selben Schnittstellen austauschbar. Mittels des Wärmetauschers 154 wird die Abwärme des Brennstoffzellensystem 14 nicht wie in Figur 1 durch direkten Kontakt der zu erwärmenden Luft mit dem Brennstoffzellensystem 14 auf die zu erwärmende Luft übertragen, sondern dies wird ohne direkten Kontakt erreicht. Dadurch wird verhindert, dass sich irgendwelche vom Brennstoffzellensystem 14 stammende Verunreinigungen oder Gerüche in der zu erwärmenden Luft ansammeln können. Die benötigte Luftströmung wird in der in Figur 2 dargestellten Abwandlung durch das in der Luftführung angeordnete Gebläse 152 erzeugt.

Nachfolgend werden verschiedene Betriebszustände aufgezeigt, die mittels der vorstehend beschriebenen Klimaanlage realisierbar sind:

Kühlbetrieb mit Umluftzirkulation: In diesem Betriebszustand ist die Stelleinrichtung 68 so geschaltet, dass Luft aus dem Innenraum 78 über die Luftführung 82 zu dem Gebläse 64 geführt wird. Dieser Luftstrom 70 wird gekühlt und über die Stelleinrichtung 72 und die Luftführung 74 in den Innenraum 78 geführt, wodurch dieser gekühlt wird. Um im Kühlbetrieb ein Aufheizen des Kofferraums, in dem die Klimaanlage 12 angeordnet ist, zu vermeiden, sind entsprechende (nicht dargestellte) Gebläse und Leitungen vorgesehen, welche die Abwärme des Brennstoffzellensystems 14 und die Abwärme des Kondensators 58 nach Außen abführen. Im Falle des Kondensators 58 könnte dieser alternativ auch Außen am Fahrzeug 10 angeordnet werden, um somit die Abwärme direkt abzutransportieren.

Kühlbetrieb mit Außenluftzuführung: In diesem Betriebszustand ist die Stelleinrichtung 68 so geschaltet, dass Außenluft über die Außenluftleitung 66 zu dem Gebläse 64 geführt wird. Der Luftstrom 70 wird gekühlt und über die Stelleinrichtung 72 und die Luftführung 74 in den Innenraum 78 geführt. Der über die Luftführung 82 aus dem Innenraum 78 führende Luftstrom wird von der Stelleinrichtung 68 nach Außen abgegeben. Hinsichtlich des Abführens der Abwärme des Brennstoffzellensystems 14 und des Kondensators 58 werden die im Rahmen des vorstehend beschriebenen Kühlbetriebs erläuterten Maßnahmen ergriffen.

Heizbetrieb mit Umluftzirkulation: In diesem Betriebszustand wird über die Luftführung 82, die Stelleinrichtung 68 und die Luftführung 84 ein Luftstrom 88 aus dem Innenraum 78 zum Gebläse 86 bzw. zum Wärmetauscher 154 geführt. Der Kältekreis 16 ist nicht in Betrieb, d.h. der Elektromotor 32 wird nicht betrieben. Je nach Ausführung führt das Gebläse 86 den Luftstrom 88 an den heißen Teilen des Brennstoffzellensystems 14 vorüber oder das Gebläse 152 erzeugt einen durch den Wärmetauscher 154 führenden Luftstrom. Die auf diese Weise vorgewärmte Luft wird mittels der Luftführung 90 zu der elektrischen Heizeinrichtung 36 und weiter zur Stelleinrichtung 72 geführt. Die elektrische Heizeinrichtung 36 wird zur Erwärmung der Luft in der Luftführung 90 mit elektrischem Strom betrieben. Anschließend strömt die erwärmte Luft über die Stelleinrichtung 72 und die Luftführung 74 in den Innenraum 78.

Heizbetrieb mit Außenluftzuführung: In diesem Betriebszustand wird Außenluft über die Außenluftleitung 66 von der Stelleinrichtung 68 der Luftführung 84 zugeführt. Die durch den Betrieb des Brennstoffzellensystems 14 entstehende Abwärme erwärmt den Luftstrom 88 direkt oder indirekt. Dieser erwärmte Luftstrom wird, wie im vorstehend beschriebenen Betriebszustand, über die Luftführung 90, die elektrische Heizeinrichtung 36, die Stelleinrichtung 72 und die Luftführung 74 in den Innenraum 78 geleitet. Anschließend wird dieser Luftstrom über die Luftführung 82 zur Stelleinrichtung 68 geführt, wo er nach Außen abgegeben wird.

Diese unterschiedlichen Betriebszustände werden über eine elektronische Steuereinheit angesteuert, die je nach Temperatur im Innenraum 78, Außentemperatur, eingestellten Solltemperaturen und gewünschtem Klimatisierungsbetrieb den geeigneten Betriebszustand auswählt. Diese elektronische Steuereinheit ist aus Gründen der Übersichtlichkeit in den Figuren nicht dargestellt, jedoch ist dem Fachmann sofort ersichtlich, dass diese zumindest mit den entsprechenden Fördereinrichtungen in den Strängen 20, 22, 24, 44 und 46 der Energieverteilung in der elektrischen Leitung 30, den Gebläsen 64 und 86, der elektrischen Heizeinrichtung, dem Elektromotor 32, den Stelleinrichtungen 68 und 72 sowie den entsprechenden Temperatursensoren verbunden ist.

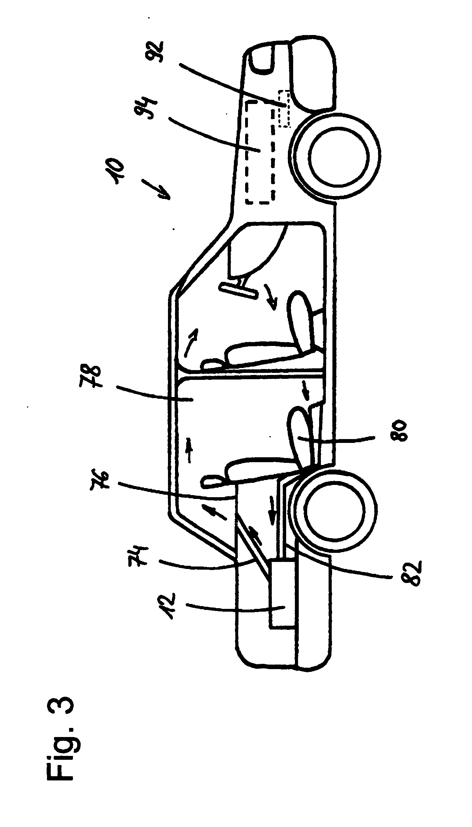

Figur 3 zeigt eine schematische Darstellung des Kraftfahrzeugs 10 mit der erfindungsgemäßen Klimaanlage 12. Die erfindungsgemäße Klimaanlage 12 ist im Kofferraum montierbar, vorzugsweise als nachrüstbare Einheit. Zusätzlich zur beschriebenen Klimaanlage 12 hat das Kraftfahrzeug 10 eine herkömmliche Klimaanlage 92, bei der ein Kompressor eines herkömmlichen Kältekreises mechanisch von einem Antriebsaggregat 94, vorzugsweise einem Verbrennungsmotor, antreibbar ist. Während der Fahrt des Kraftfahrzeugs 10 und dem damit verbundenen Betrieb des Antriebsaggregats 94 kann der Innenraum 78 über die herkömmliche, fahrzeugeigene Klimaanlage 92 in allgemein bekannter Weise gekühlt bzw. mittels Abwärme des Antriebsaggregats 94 erwärmt werden. Bei Stillstand des Antriebsaggregats 94 kann der Innenraum 78 über die erfindungsgemäße Klimaanlage 12 klimatisiert werden.

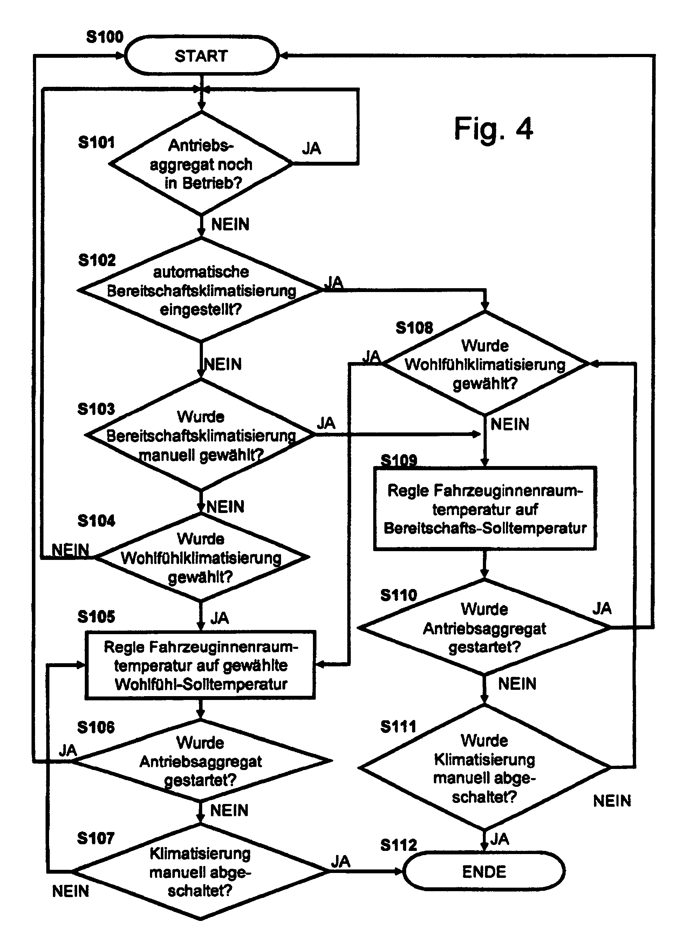

Figur 4 zeigt ein Flussdiagramm des Klimatisierungsbetriebs der erfindungsgemäßen Klimaanlage 12. Die Routine aus Figur 4, welche von der elektronischen Steuereinheit ausgeführt wird, startet bei Schritt S100, wenn die Klimaanlage 12 manuell eingeschaltet wird. Bei Schritt S101 wird bestimmt, ob das Antriebsaggregat 94 immer noch in Betrieb ist. Der Prozess fährt erst dann zu Schritt S102 fort, wenn die Abfrage in Schritt S101 negativ ist. In Schritt S102 wird bestimmt, ob der Benutzter über einen Auswahlschalter oder eine entsprechende Programmierung der Klimaanlage 12 einen automatischen Bereitschaftsklimatisierungsbetrieb ausgewählt hat. Falls dies nicht der Fall ist, fährt der Prozess zu Schritt S103 fort, wo bestimmt wird, ob der Benutzer manuell eine Bereitschaftsklimatisierung ausgewählt hat. Ist dies nicht der Fall, dann fährt der Prozess zu Schritt S104 fort, wo bestimmt wird, ob der Benutzer manuell eine Wohlfühlklimatisierung ausgewählt hat. Falls dies mit "JA" zu beantworten ist, fährt der Prozess zu Schritt S105 fort, bei dem eine Wohlfühlklimatisierung durchgeführt wird. Bei dieser Wohlfühlklimatisierung wird der Innenraum 78 des Kraftfahrzeugs 10 auf eine Wohlfühltemperatur (z.B. 18°C) klimatisiert, indem von der elektronischen Steuereinheit eine Auswahl aus den verschiedenen Heiz- und Kühlmodi getroffen wird. Mit dem nachfolgenden Schritt S106 wird festgelegt, dass diese Wohlfühlklimatisierung automatisch gestoppt wird, wenn das Antriebsaggregat 94 gestartet wird. Wenn in Schritt S106 bestimmt wird, dass das Antriebsaggregat 94 noch nicht läuft, wird in S107 bestimmt, ob die Klimaanlage 12 manuell abgestellt wurde. Bei einer manuellen Abschaltung endet der Prozess bei Schritt S112, ansonsten kehrt der Prozess zurück zu Schritt S105. Falls der Benutzer in Schritt S104 keine Wohlfühlklimatisierung gewählt hat, kehrt der Prozess zu Schritt S101 zurück. Falls in Schritt S102 bestimmt wurde, dass eine automatische Bereitschaftsklimatisierung gewählt wurde, dann fährt der Prozess von dort zu Schritt S108 fort, wo bestimmt wird, ob von dem Benutzer manuell eine Wohlfühlklimatisierung gewählt wurde. Ist dies der Fall, dann fährt der Prozess zu Schritt S105 fort, wo die bereits beschriebene Wohlfühlklimatisierung durchgeführt wird. Falls in Schritt S108 bestimmt wird, dass der Benutzer keine Wohlfühlklimatisierung ausgewählt hat, dann fährt der Prozess zu Schritt S109 fort, wo die erfindungsgemäße Bereitschaftsklimatisierung durchgeführt wird. Bei dieser Bereitschaftsklimatisierung wird die Temperatur im Innenraum 78 auf eine Bereitschafts-Solltemperatur (z.B. 25°C) geregelt, die sich von der Wohlfühltemperatur unterscheidet. Dies wird realisiert, indem die elektronische Steuereinheit in geeigneter Weise aus den beschriebenen Heiz- und Kühlbetriebsarten auswählt. Ist die Außentemperatur hoch, dann ist die Bereitschafts-Solltemperatur größer als die Wohlfühltemperatur. Ist hingegen die Außentemperatur niedrig, dann ist die Bereitschafts-Solltemperatur geringer als die Wohlfühltemperatur. Somit wird beispielsweise bei hoher Außentemperatur ein Aufheizen des Innenraumes 78 verhindert und im Bedarfsfall ein sehr schnelles Erreichen der Wohlfühltemperatur gewährleistet, weil der Innenraum 78 bereits "vorgekühlt" ist. Nach Schritt S109 fährt der Prozess zu Schritt S110 fort, wo überprüft wird, ob das Antriebsaggregat 94 gestartet wurde. Ist dies der Fall, dann kehrt der Prozess zu Schritt S100 zurück. Ansonsten fährt der Prozess zu Schritt S111 fort, wo bestimmt wird, ob der Benutzer die Klimatisierung manuell abgestellt hat - wenn "JA", dann endet der Prozess bei Schritt S112 und wenn "NEIN", dann kehrt der Prozess zu Schritt S108 zurück.

Der bevorzugte Betrieb der Klimaanlage 12 sieht in der Praxis so aus, dass eine automatische Bereitschaftsklimatisierung gewählt ist. Wird das Antriebsaggregat 94 betrieben, dann kann der Innenraum 78 über die auf das Fahrzeug optimierte, sehr effektive und speziell ausgelegte Klimaanlage 92 klimatisiert werden. Sobald das Antriebsaggregat 94 abgestellt wird (und die Insassen das Kraftfahrzeug 10 eventuell verlassen), startet die Klimaanlage 12 die Bereitschaftsklimatisierung, die den Innenraum bei hoher Außentemperatur auf beispielsweise 25°C kühlt. Dieser Bereitschaftsklimatisierungsbetrieb kann mit 60 Litern Brennstoff problemlos 12 Tage im Dauerbetrieb erfolgen. Der Bereitschaftsklimatisierungsbetrieb wird solange durchgeführt, bis der Benutzer kurz vor Fahrtantritt eine Wohlfühlklimatisierung wählt, die dann den Innenraum 78 auf beispielsweise 18°C kühlt. Die Wohlfühlklimatisierung wird dann solange durchgeführt bis das Antriebsaggregat 94 wieder gestartet wird.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste:

- 10: Kraftfahrzeug
- 12: Klimaanlage
- 14: Brennstoffzellensystem
- 16: Kältekreis
- 18: Reformer
- 20: Brennstoffstrang
- 22: Brennstoffstrang
- 24: Oxidationsmittelstrang
- 26: Brennstoffzellenstapel
- 28: Kathodenzuluftstrang
- 30: Elektrische Leitung
- 32: Elektromotor
- 34: Batterie
- 36: Elektrische Heizeinrichtung
- 38: Anodenabgasstrang
- 40: Mischeinheit
- 42: Nachbrenner
- 44: Brennstoffstrang
- 46: Oxidationsmittelstrang
- 48: Mischeinheit
- 50: Kathodenabluftstrang
- 52: Wärmetauscher
- 54: Abgasauslass
- 56: Kompressor
- 58: Kondensator
- 60: Expansionsorgan
- 62: Verdampfer
- 64: Gebläse
- 66: Außenluftleitung
- 68: Stelleinrichtung
- 70: Luftstrom
- 72: Stelleinrichtung
- 74: Luftführung
- 76: Hutablage
- 78: Fahrzeuginnenraum
- 80: Sitzbank
- 82: Luftführung
- 84: Luftführung
- 86: Gebläse
- 88: Luftstrom
- 90: Luftführung
- 92: Herkömmliche Klimaanlage
- 94: Antriebsaggregat
- 100: Schnittstelle
- 102: Schnittstelle
- 104: Schnittstelle
- 106: Schnittstelle
- 108: Schnittstelle
- 120: Schnittstelle
- 122: Schnittstelle
- 124: Schnittstelle
- 126: Schnittstelle
- 128: Schnittstelle
- 130: Schnittstelle
- 132: Schnittstelle
- 134: Schnittstelle
- 136: Schnittstelle
- 138: Schnittstelle
- 140: Schnittstelle
- 142: Schnittstelle
- 144: Schnittstelle
- 146: Schnittstelle
- 148: Schnittstelle
- 150: Schnittstelle
- 152: Gebläse
- 154: Wärmetauscher

## Patentansprüche

1. Klimaanlage (12) für ein Kraftfahrzeug (10) zur Standklimatisierung, mit:
- einem Brennstoffzellensystem (14) umfassend mehrere Funktionseinheiten (18, 26, 42) zum Behandeln des Brennstoffs; und
- einem von dem Brennstoffzellensystem (14) betreibbaren Kältekreis (16) umfassend mehrere in Fluidverbindung stehende Funktionseinheiten (56, 58, 60, 62),
**dadurch gekennzeichnet, dass** zumindest eine der Funktionseinheiten (18, 26, 42, 56, 58, 60, 62) und/oder das Brennstoffzellensystem (14) und/oder der Kältekreis (16) als lösbares Modul mittels zumindest einer Schnittstelle (100 - 146) in der Klimaanlage (12) montierbar ist, welche auch dazu ausgelegt ist, eine Austauscheinheit anstelle des lösbaren Moduls (14, 16, 18, 26, 42, 56, 58, 60, 62) in die Klimaanlage (12) zu montieren.

2. Klimaanlage gemäß Anspruch 1, **dadurch gekennzeichnet, dass** des Weiteren eine Schnittstelle (148, 150) vorgesehen ist, um wahlweise einen Wärmetauscher (154), zum Aufnehmen der Abwärme zumindest einer Komponente (18, 26, 42) des Brennstoffzellensystems (14) für Heizzwecke, in der Klimaanlage (12) lösbar zu montieren.

3. Klimaanlage (12) gemäß einem der vorhergehenden Ansprüche, **dadurch gekennzeichnet, dass** sich das lösbare Modul (14, 16, 18, 26, 42, 56, 58, 60, 62) von der Austauscheinheit zumindest durch seine Leistung unterscheidet.

4. Klimaanlage (12) gemäß einem der vorhergehenden Ansprüche, **dadurch gekennzeichnet, dass** die Schnittstelle (100 - 150) eine Verbindung ist, die ohne klimaanlagenfremde Werkzeuge lösbar und befestigbar ist.

5. Klimaanlage (12) gemäß einem der vorhergehenden Ansprüche, **dadurch gekennzeichnet, dass** die das Brennstoffzellensystem (14) umfassenden Funktionseinheiten (18, 26, 42) Elemente der Gruppe bestehend aus einem Reformer (18), einem Brennstoffzellenstapel (26) und einem Nachbrenner (42) sind.

6. Klimaanlage (12) gemäß einem der vorhergehenden Ansprüche, **dadurch gekennzeichnet, dass** die der Kältekreis (16) umfassende Funktionseinheiten (56, 58, 60, 62) Elemente der Gruppe bestehend aus einem Kompressor (56), einem Kondensator (58), einem Expansionsorgan (60) und einem Verdampfer (62) sind.

7. Kraftfahrzeug (10) mit einer Klimaanlage (12) gemäß einem der vorhergehenden Ansprüche.
